# EUROPEAN PATENT SPECIFICATION

(11) **EP 3 549 314 B1**
(45) Date of publication and mention of the grant of the patent: **13.11.2024**
(21) Application number: 17803971.5
(22) Date of filing: 29.11.2017
(51) Int. Cl.: H04L 47/24, H04L 47/2475, H04W 28/02

(54) **OPPORTUNISTIC QOS IMPLEMENTATION**
OPPORTUNISTISCHE QOS-IMPLEMENTIERUNG
MISE EN OEUVRE QOS OPPORTUNISTE

(30) Priority: 29.11.2016 EP 16201137
(43) Date of publication of application: 09.10.2019
(73) Proprietor: IPCom GmbH & Co. KG, 82049 Pullach (DE)
(72) Inventor: HANS, Martin, 31162 Bad Salzdetfurth (DE)
(74) Representative: Tomlinson, Edward James
(86) International application number: PCT/EP2017/080744
(87) International publication number: WO 2018/099936

(56) References cited:
- US-A1- 2008 132 268
- US-A1- 2014 162 676
- US-A1- 2014 321 411

## Description

The present invention relates to a method of modifying an existing quality of service, QoS, setting in a mobile communications network between a user equipment, UE, and a base station.

Cellular mobile communications networks provide mobile data communication to mobile devices within their coverage area. The service is based on cells spanned by base stations providing the air interface and a core network providing the backbone for the base stations as well as authentication, data routing and other services to the mobile device (UE).

The mobile network architecture for 2G/3G systems is described in 3GPP TS 23.060, and that of the 4G system is described in 3GPP TS 23.401. The systems offer data communication between a UE and a data network based on logical connections between the UE and the respective gateway (packet data network, PDN, connections). Most of these connections are IP-based, therefore the respective gateway allocates an IP-address from the data network to the UE which is valid for the respective PDN connection throughout the lifetime of the connection. A UE may have multiple PDN connections to a data network with the same IP-address used by the UE, it may have multiple connections with different IP-addresses to different data networks (e.g. Internet, MMS, IMS).

Within PDN connections, data communication may happen in different service data flows (SDF). These flows give the smallest granularity of differentiating data forwarding treatment, i.e. data within one SDF is treated with equal quality of service and priority and they are delivered basically in order; whereas data in different flows may have different priority and may face different treatment by the network, e.g. prioritization of higher priority packets resulting in intended out-of-order delivery.

In the 3G/UMTS system the quality of service, QoS, concept is described in technical standard 23.107, with one of the technical requirements for QoS being that QoS behaviour should be dynamic, with the possibility to modify QoS attributes during an active session. Four different QoS classes are provided, each with different attributes. A service manager co-ordinates the functions of the control plane for establishing, modifying and maintaining the service it is responsible for. A QoS change is implemented by sending a "Modify PDP Context Request" message, which includes the new QoS (see 3GPP TS 24.008).

For the next generation mobile network ("5G" or "Next Generation (NG)"), the architecture will offer more flexibility allowing operators to adapt the services offered to the UE to its actual needs. A single connection between UE and a data network is denoted as a packet data unit, PDU, session. It is setup and maintained very flexibly and more than one PDU session to the same data network for a single UE may exist, e.g. with different IP-address (so called multi-homing) and/or with a different quality of service, QoS. Within one PDU session, PDU flows may exist that constitute, similar to the SDF in the legacy core network, the smallest granularity if QoS treatment. So, several PDU flows with (slightly) different QoS settings, e.g. different priority, may exist within one PDU session. Multiple PDU sessions to one data network may exist with more impacting differences in QoS settings, e.g. different IP-address-preservation settings and resulting different mobility treatment or with different IP-addresses.

Figure 7.6.2-1 of 3GPP TR 23.799, a working document for the 5G architecture, depicts a foreseen non-roaming network architecture for 5G for UEs concurrently accessing a local and a central data network using multiple PDU sessions.

The UE connects to a next generation (radio) access network (NG (R)AN) which is connected via a next generation core (network) user-plane (UP) function to a data network (DN). The UP function is basically a network router and/or gateway; it may be present multiple times cascaded per PDU session between a single UE and a specific data network. The single UP function that builds the end point of the operator network towards a data network (e.g. internet or IMS) is called the terminating UP functions (TUPF) as it terminates all the PDU sessions between a UE and that data network. The terminating function was denoted packet gateway (PGW) in the LTE core network, another (not terminating) user plane function was the serving gateway (SGW), both have been replaced by (T)UPF in a more flexible 5G architecture.

The UE and the base station are connected to the next generation mobility management function (MMF) which controls the UE registration and mobility and which routes control messages related to PDU sessions (setup of new PDU sessions, modifications, release etc.) to the session management function (SMF). The SMF communicates with a policy control-plane function and an application function, the latter residing e.g. in a third party application server.

As shown, there is only a single instance of each function. In fact, a UE can be connected via multiple accesses (e.g. NG radio and LTE) and have different PDU sessions that are routed via different UP functions to different or the same data networks. For each PDU session of IP-type, which is the typical case, an IP-address is allocated to the UE. A UE may also communicate with multiple session management functions, each used for some of the UE's PDU sessions. For each UE, however, a single mobility management function (MMF) is responsible. It is the UE's single entry point to the control plane of the core network.

TR 23.799 describes potential mobility procedures for 5G in multiple variants that define mobility requirements for a UE and its PDU sessions. For example, different so called session and service continuity (SSC) modes 1, 2 and 3 may be defined for a 5G system. For each PDU session of a UE one of these modes is applicable. The mode describes whether and how the terminating user plane function (TUPF), i.e. the gateway towards a data network, may be changed as a result of UE mobility. Mobility here means either within one radio technology or between radio technologies, resulting in the necessity to change the TUPF. A UE moving from one cell to another may leave the area a TUPF can efficiently serve or a UE changing from 5G to WLAN / fixed access may have to change to a TUPF that is able to serve fixed connections.

While changing the TUPF, the IP-address allocated to the UE for that data network is typically changed and the SSC mode defines whether this is acceptable and how it is done. The following alternatives exist according to the current version of TR 23.799 for a specific PDU session:
- SSC1: The TUPF is never changed during the lifetime of a PDU session, independent of the radio network
- SSC2: The TUPF is changed, when the UE leaves the serving area of the TUPF which may comprise multiple cells of the same or different access technologies (or technologies not based on cells like fixed access). The network releases the current PDU session and requests the UE to request a new one. The new TUPF may be prepared by the network so that the new session is setup appropriately.
- SSC3: The network may decide to change the TUPF of a PDU session. The UE either initiates establishment of a new PDU session and steers applications to the new session (after which the old session is released) or the existing PDU session is moved to a new TUPF. For the latter solution, two IP-addresses may be assigned concurrently for a short time (so called multi-homing).

When requesting a PDU session, the UE may indicate the requested session and service continuity (SSC) mode as part of the PDU session setup signalling to the network. The UE may determine the required SSC mode as described in IETF draft "draft-ietf-dmm-ondemand-mobility", which describes an application programming Interface (API) extension for applications to request a socket and thereby requesting a nomadic, sustained or fixed IP-address. These correspond to SSC2 (nomadic) or SSC1 or SSC3 for (sustained or fixed).

Typical examples for applications requiring SSC1 are browser-applications contacting a web-server for a service, they usually cannot cope with a change of IP-address. SSC3 is typically used by voice applications (skype, SIP based), which have means implemented to overcome occasional IP-address changes. SSC2 is used for services only having short communicating sessions like messaging apps or DNS service clients. These are not seriously impacted by IP-address changes.

A different description in the same TR 23.799 defines Session Classes for a specific PDU session of a UE alternatively to SSCs. The classes are also defined for cases of mobility and a resulting change of a user plane function (UPF). They distinguish whether resources of a PDU session to be moved to the target are setup before the actual TUPF change (so called Session pre-setup similar to handover in LTE) or after the TUPF change (Session post-setup). The two classes basically describe a very similar distinction as SSC2 (like session post-setup) and SSC3 (like session pre-setup).

In summary, in the next generation mobile communication system it will be possible to configure individual connections to data networks according to the requirements of the application or service using the connection. Especially in case of mobility with a resulting change of gateway (user plane function), different services have different requirements for IP-address preservation and service continuity. A UE may have multiple connections to the same data network and at the same time connections to different data networks and all of these connections can be setup according to their respective requirements, i.e. with different service continuity and IP-address preservation treatment. Within one connection, PDU flows define data with exactly the same treatment while several such flows within a connection may differ in QoS.

The new flexibility of the next generation mobile network in number and nature of PDU sessions between a UE and a data network and number of IP-addresses allocated to the UE with respect to a data network (formally restricted to one) leads to multiple PDU sessions being setup with parameters adapted very tightly to the services and applications using them.

Looking at the variety of applications and services offered on mobile devices, some application may have strict requirements. For example, an application may have a strict requirement for keeping its IP-address or for service continuity having short or basically no disruption caused by the device's mobility. Another application may be basically indifferent about IP-address changes or longer data delivery disruption and even loss of data packets due to mobility.

On the other hand, there may also be applications that can cope with occasional IP-address changes, because they have built-in means to overcome the change, but these means consume significant resources, e.g. they need additional data exchange with an application-server or additional contacts with a DNS server, they may need calculation power or there may be negative effects to the user that are acceptable but not beneficial.

Similarly, there may be applications that can cope with longer disruption of data delivery, e.g. due to a build-in buffer or other means, but these means cause consumption of additional resources, too. E.g. more control data may need to be exchanged on network or application layer, the buffer memory is taken from other services or the risk of reduced quality of experience for the user is increases.

It is not known to provide means for applications to indicate a strict service requirement and in addition indicate the fact that it would benefit from better service. This would allow a network to provide the service according the strict requirements as long as the network can save resources. When another service is requested in addition that has strict requirements for a better service, i.e. shorter disruption or preserved IP-address, and as a result the network has to provide such service, the network changes the service also for the first application. As a result, the first application will benefit as indicated and the network may profit due to resources not required to overcome the limited service according to the strict requirement of the first application.

US 2008/0132268 A1 describes a technique for initiating a first application with a first QoS setting and when a PDP context changes, updating the QoS setting. US 2014/0162676 A1 describes the setting up of a new bearer in response to a demand for a new service with a higher QoS.

The present invention provides a method of providing a quality of service setting for a first application operating on a user equipment device according to claim 1. The invention further provides a corresponding UE according to claim 12 and a corresponding network equipment device according to claim 15.

In one aspect, the present invention provides means for applications to request services from a mobile network according to their strict requirements and additionally allows an indication that these applications would benefit from better service in terms of preserved IP-addresses, reduced disruption time and/or reduced data loss.

The invention also allows a mobile network that provides to first applications on mobile devices connections to data networks serving the first application's strict quality requirements as long as it can avoid to provide connections with better quality. If the network has to provide other applications on the mobile device a connection to the data network with better service, it provides the better service also to the first application if the first application indicated to benefit from better service.

The invention further provides a network being able to provide first services according to a first quality level and as a result of a second service being requested with a second (better) quality level, providing first services that benefit from better service and the second services according to the second quality level. This may include to continue serving first services that do not benefit from better service with the first quality level.

Accordingly, serving a mobile device may be done more efficiently and in a way that increases the quality of experience of the mobile device user.

Preferred embodiments of the invention will now be described, by way of example only, with reference to the accompanying drawings in which:
Fig. 1 shows a schematic illustration of a UE running multiple applications;
Fig. 2 shows a message sequence chart implementing a first aspect of the invention;
Fig. 3 shows a further message sequence chart implementing a second aspect of the invention;
Fig. 4 shows a another message sequence chart implementing a third aspect of the invention;
Fig. 5 shows a flow chart of events from a perspective of the UE; and
Fig. 6 shows a flow chart of events from a perspective of the network.

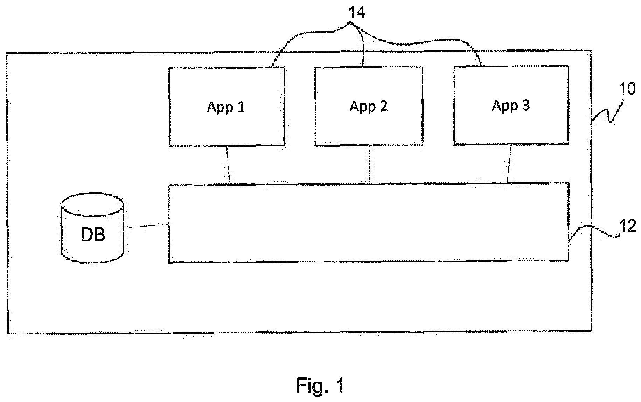

Fig. 1 depicts a schematic representation of mobile device in the form of a UE 10 comprising communication interface 12. This interface may consist of a cellular modem able to communicate according to a fifth generation cellular communication standard, LTE and UMTS. The communication interface may also include WLAN (WiFi) and other communication technologies.

Fig. 1 shows in an exemplary manner three applications 14 (in short "apps") usable on the device. There may be many more apps on the device, e.g. as part of the device's operating system (OS) or downloaded into the device on request by the device's user.

When the apps 14 need to communicate with other devices, e.g. a server in the internet having a peer application running, they request a communication service from the communication interface 12. The request may be directly provided or, more likely, it may be placed as a procedure call in the operating system.

The request may provide information about the quality of service the application requires to work properly (strict requirements). The quality of service information may include requirements on quality of service measures like maximum disruption time, average or maximum packet loss and IP-address preservation needs.

The request may also include additional quality of service information providing information about alternative quality of service with which the application can provide its service in a way that is preferable for the user, the device and/or the network. This information may be very simple, e.g. in the form of flags for the three QoS measures above, each flag indicating "can profit from better service" or "cannot profit from better service". The information may also be more sophisticated, e.g. in the form of a parameter whose value indicates a level of benefit that is well known by the UE and/or the network (in other words, the values are standardized). The meaning of example values could be:
For IP-address preservation:
   4: "IP-address preservation saves significant client-server communication and prevents short service interruption"
   3: "IP-address preservation saves small client server communication and prevents short service interruption"
   2: "IP-address preservation prevents small service interruption"
   1: "IP-address preservation does not have a positive effect on service"
For service continuity:
   x: <Integer 1 - 256> "Only disruptions shorter than <x> ms are guaranteed not to be noticed by the user"
For loss of data:
   x: <Integer 1 - 256> "Loss of <x> consecutive packets will lead to service degradation, yet without service loss", or
   x: <Integer 1 - 32> "Loss of 2^<x> consecutive byte of data will lead to service degradation, yet without service loss".

The strict requirements of the application, i.e. quality of service information, and the additional quality of service information may also be communicated together, e.g. as a value range. For example, an app could request internet service with 20 - 100 Mbyte/s bandwidth and potential IP-address changes from occasional to never. The lower limit of the respective value range may be interpreted as a strict or minimum requirement by the app, in this case 20 Mbyte/s and only occasional IP-address changes; whereas all values above up to the upper limit would be preferable.

While requesting value ranges as QoS parameters is generally known from prior-art, the way these ranges may be used by the network in two steps providing minimum service in general and better service only if it has to be offered for other apps, is new.

The QoS information may be provided as described above by the application to the OS and / or the communication means to be taken into account. The information may alternatively be stored in a database 16 on the mobile device. The database may store policies regarding quality of service information and additional quality of service information for various applications as described above. When an app requests communication service, the OS or the communication means may look up the respective QoS and additional QoS information in the data base.

Another alternative is that such QoS and additional QoS information is stored in the network, e.g. in a data base in the network shown. A request for a network connection to a data network or for an additional data flow to a data network for a specific application may contain information that allows the network to identify the application or the service requesting the connection or the flow. This identity may enable the network to look up the respective QoS and additional QoS in the database in the network. The database may store policies regarding quality of service information and additional quality of service information for various applications either subscriber specific or for multiple/all subscribers.

The communication means in the UE will react on the request by the application by initiating a new data flow or (in case the app needs multiple data flows) new data flows. If no appropriate PDU session exists, the UE will issue a request for a new PDU session towards the network. Otherwise it may select an existing PDU session for delivery of the flow(s).

No appropriate PDU session may exist because no PDU session to the requested data network is setup by the UE or the existing PDU sessions with the data network have the wrong QoS or are exclusively used by other applications. Also, the network may have configured the UE with filters for PDU session selection for new flows which filters indicate the need to setup a new PDU session for the new flow(s) based on the requested service parameters.

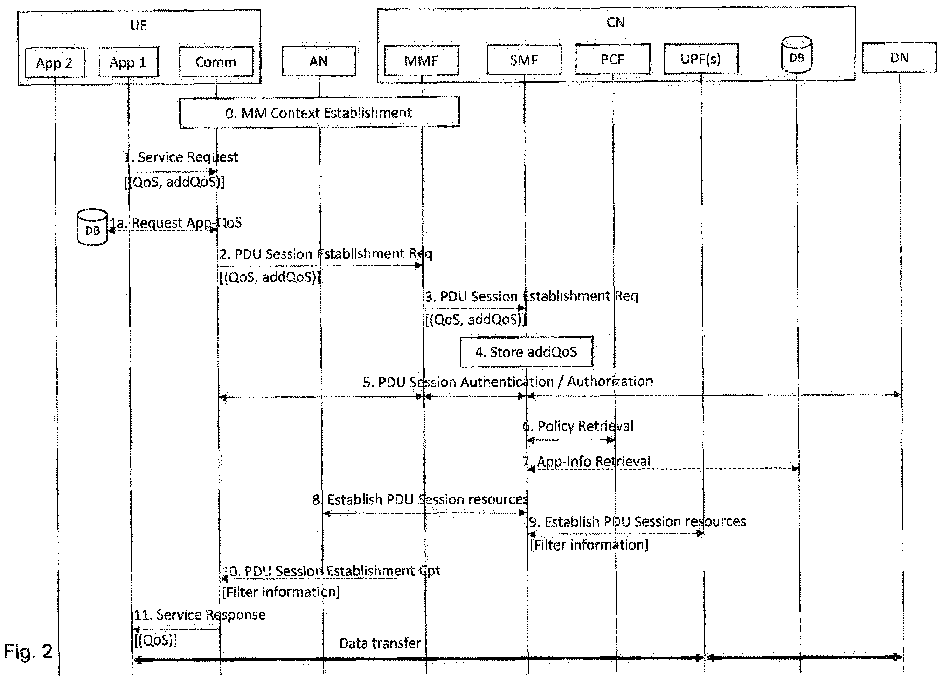

Fig. 2 shows a setup of a new PDU session initiated by an application on the UE. The different elements or functions involved in the PDU session setup procedure are shown. A UE 20 including two applications (App1 and App2) and a communication interface Comm is depicted in the figure. The UE can directly talk to the access network AN that may be a radio access network communicating with the UE via antennas. The access network AN may also be a fixed network or a hybrid fixed and WiFi network.

The access network AN is connected to a core network CN having different functions, most functions are shown only once but may potentially exists multiple times in a core network. The mobility function MMF, session management function SMF, policy control function PCF and two or more user plane functions UPF(s) and New UPF(s) (not shown). The core network CN also includes a database DB. Data may be exchanged between the core network and one or several data networks DN.

For the description of the PDU session setup as shown in Fig. 2, it is assumed that the UE has registered in the network and thus a mobility management context exists. The steps to achieve this are summed up in step 0 *MM Context Establishment* which may consist of multiple messages to be exchanged.

When an application, e.g. App 1, requests a data communication service with a data network DN as depicted in step 1, e.g. via an application programming interface (API), the communication interface in the UE will check whether the UE already has a PDU session to this DN and if so, whether or not the PDU session is applicable for additional transport of the requested service. App 1 may include in its request QoS parameters describing the service quality required to perform the service. As an example, App 1 may indicate that occasional IP-address change is acceptable for the application. App 1 may also include additional service quality parameters addQoS the application may make use of, e.g. App 1 may include the information that IP-address preservation would save significant application layer control signalling. The additional service quality parameters may alternatively also be received from a UE-internal data base in an optional step 1a.

Assuming a new PDU session may be necessary because no PDU session exists to the respective DN, the UE will request PDU session establishment from the MMF via the AN as shown as step 2. This request may contain the QoS description as received from the app including the additional QoS description. The MMF will select an appropriate SMF and forward the request including QoS and additional QoS in step 3. The SMF will base the following PDU session setup procedure purely on the QoS requirements of the app. In addition, the SMF may store the additional QoS parameters (step 4) so that they can be used in case future PDU sessions may provide the additional QoS and may allow App 1 to be served accordingly. The SMF may authenticate and authorize the UE and the session parameters with the DN (step 5), get policy information from the PCF (step 6) and select an appropriate UPF or UPFs if the service requires more than one UPF. In the optional step 7 the SMF may receive application specific QoS information from any data base within the core network or from the DN, especially when no such information has been received in step 1 and 1a. The PDU session resource establishment is triggered based on the QoS parameters, the QoS authorized by the DN and the operator policy. The PDU session resource establishment is performed with the AN (step 8) and the respective UPF (step 9). The terminating gateway (TUPF) is provided with filter information steering the respective DL data to be transported via the newly established PDU session. The UE is informed about completion of the PDU session establishment in step 10 including filter information steering the respective UL data from App 1 to be transferred over the new PDU session. In step 11 the application may be informed that the requested service is available which may be accomplished by additional information about the QoS actually provided by the network.

Data transfer can now happen between App 1 and DN via AN and the selected UPF with the provided QoS based on the application's requirements.

According to Fig. 2, additional QoS information is submitted within the service request and/or PDU session establishment request from the application via communication interface to the network and its storage in the core network, e.g. in the SMF. Alternatively, the additional QoS information is received from databases in the UE or core network.

The use of the new parameters and their benefits will now be described.

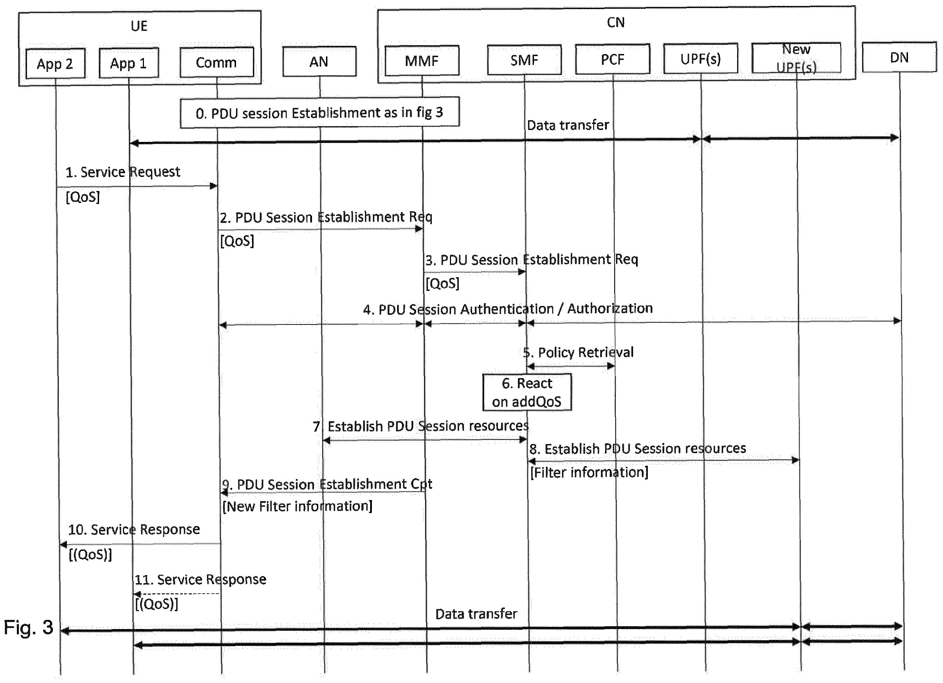

In Fig. 3, the setup of an additional PDU session for a second app is depicted. The figure assumes as a prerequisite the establishment of a first PDU session according to Fig. 2 as described above and shown as step 0 in Fig. 3. Data transfer between App 1 and data network DN via access network AN and the selected UPF(s) may still occur as depicted.

App 2 may request data delivery service with an application-specific QoS from the communication means, e.g. App 2 may request a service including IP-address preservation during the connection. Again, as in Fig. 2, the QoS of App 2 may be received from the application, from a UE-internal database or from a core network based database. The alternatives will not be shown in further figures; they should be understood to be general alternatives applicable to all examples in this specification.

It is assumed in this example that the QoS of App 2 is such, that the currently established PDU sessions are not sufficient to provide the service to App 2. Assuming the requested QoS to demand IP-address preservation, it may be foreseen by the operator network to provide such service with an IP-address from a different address range than the one used for App 1. Another possible strategy in the operator network may be to serve IP-address preservation from different gateways (TUPF) because the selected gateway requires different support of mobility.

A different embodiment of this invention could have App 2 request a QoS that demands session continuity with seamless mobility, i.e. handover pre-preparation and low or no disruption time due to mobility which may be provided with a separate PDU Session.

Different network strategies are possible that lead to establishment of a different PDU session as a result of App 2 requesting data delivery service. Fig. 3 shows the PDU session establishment process very similar to that depicted in Fig. 2. App 2 requests data delivery service with a QoS (step 1) that triggers the communication interface of the UE to request a new PDU Session (step 2). The respective request is forwarded to the appropriate SMF in step 3 and the UE and the new PDU session may be authenticated and authorized with the DN in step 4. After policies are received from the PCF (step 5) the SMF knows all details of the PDU session to be established.

The SMF can now check stored information about packet flows already established. Especially, the SMF may check for packet flows having a current QoS that is lower than the one to be established for the new PDU session and having indicated to benefit from at least one different parameter setting that is applicable for the new PDU session. In the example, the SMF may find App 1 to benefit from IP-address preservation. As a result, the SMF in addition to setup of the PDU session switches the packet flow of App 1 from the first PDU session setup in Fig. 2 to the new PDU session to be established, depicted as step 6 in Fig. 3 and denoted generally "React on addQoS".

In this example the new PDU session is shown to be established via a different UPF, denoted "New UPF(s)" that is capable of providing the newly requested QoS regarding session continuity and/or IP-address preservation.

The PDU Session resources are established with the access network AN (step 7) and the selected UPF(s) (step 8), potentially taking into account resources required to serve the packet flow for App 2 and App 1. In step 8 the filter information may contain new filters that ensure DL data of App 1 is received by the new UPF(s) and transmitted via the new PDU session.

When a confirmation of the PDU session establishment is transmitted to the UE in step 9 it will contain filters that steer traffic of App 2 to be transferred via the new PDU session. Step 9 may also contain changes of the filters regarding data of App 1 which will be re-directed to the new PDU session.

App 2 may be informed about the actual QoS the network provides and in addition, App 1 may be informed about the changes of its QoS, e.g. about now guaranteed unchanged IP-address so that App 1 can stop potential preparation of an IP-address change that consumes resources.

Data transfer can now occur between the DN and App 1 and App2, respectively, via access network AN and the newly chosen UPF(s).

Alternative implementations of the invention are possible.

As a first alternative, it is to be noted that Fig. 2 shows in step 4 the SMF to store the additional QoS information to be taken into account when later another PDU session with better service needs to be established. Alternatively, it could be the MMF that stores the information after retrieval of the PDU Session Establishment Request in step 2. Also, the information may be stored in a data base external to the MMF or SMF, e.g. a data base that is accessible by different SMFs. These two alternatives would allow the application of this invention also in cases, when the MMF selects a different SMF for the new PDU session. Fig. 3 and the description would change accordingly, so that it may be the MMF that reacts on the stored additional QoS or it is a different SMF that retrieves the information from a data base and reacts on it.

As a second alternative, QoS modification steps could also be initiated by the UE. It could then be the UE that stores information about additional QoS for App 1 and that provides related information together with the PDU Session Establishment for App 2 in Fig. 3, step 2. This information can be specifically adapted to the QoS requested by App 2, i.e. it could contain only those parts of the additional QoS of App 1 that are requested by App 2 in order to trigger the network to switch the respective PDU flow to the new PDU session.

With regard to a third alternative, the description above assumes a new UPF is selected to provide the new terminating gateway (TUPF) for the new PDU session. This assumption may or may not be true. The principles of this invention and the description above and below are valid equally if a new PDU session is established to the same terminating gateway (TUPF) providing PDU session with and without IP-address preservation or in general providing to PDU sessions both QoS and additional QoS as provided by App 1.

For a fourth alternative it is noted that the procedure described above and depicted in Fig. 3 determines in step 6 at the SMF that a flow exists that may benefit from changing the QoS. The procedure proposes to react immediately and establish the PDU session so that App 1 is re-directed to the new PDU session. This will cause App 1 to experience an additional change in the data flow that may itself disrupt the data service of App 1. In the example of IP-address preservation, that is originally not applied and by switching App 1 to the new PDU session, it will be applied on the cost of a switch to a new IP-address of the new PDU session.

An alternative that is even more efficient for App 1 and that is most effective for the whole system is that the first PDU session is kept for transport of the packet flow(s) of App 1 as long as no mobility occurs, i.e. as long as App 1 does not suffer from its minimum QoS. As soon as a situation occurs that will make re-configuration of the packet flow of App 1 necessary, e.g. as soon as mobility will result in a change of IP-address anyway, App 1 can be switched to the new PDU session. This will result in a reconfiguration effort that is comparable to switching App 1 right away after the new PDU session is established but it prevents App 1 from being impacted an additional time and if mobility never occurs, there will be no effort and no change.

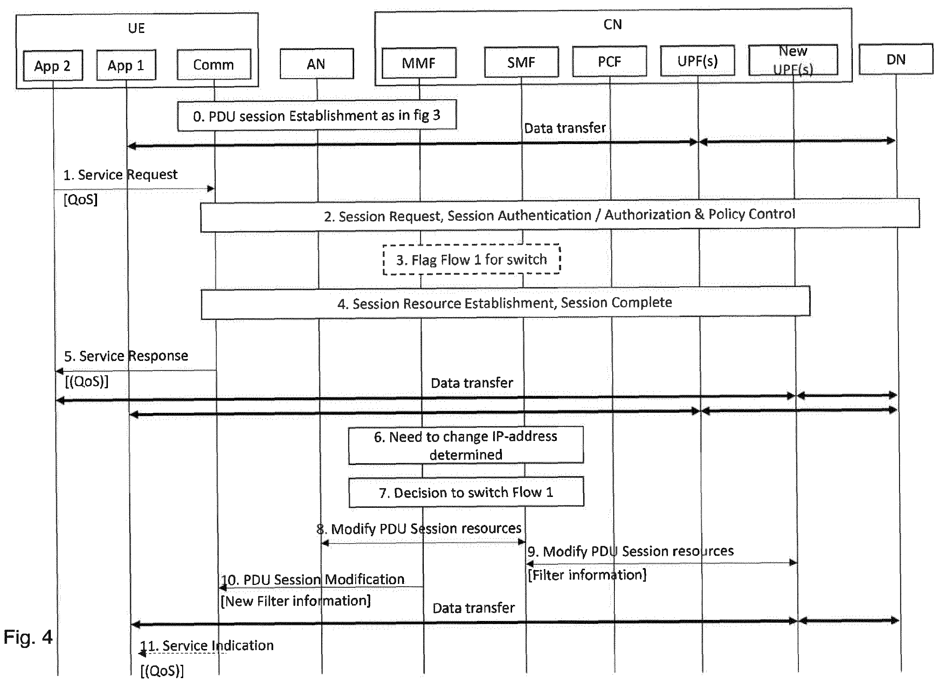

This alternative is shown in Fig. 4. For the sake of readability, steps 2, 3, 4 and 5 of Fig. 3, which are essentially identical in this alternative, have been collectively depicted as step 2 in Fig. 4. After the PDU session has been requested the MMF or the SMF may determine that the packet flow of App 1 (denoted "Flow 1") is applicable to a switch to the new PDU session that is just to be established. As a difference to the description above in reference to Fig. 3, the switch is not performed but the applicability to Flow 1 is stored, i.e. the flow is flagged to be potentially switched. Alternatively, no detection is done at this point in time (therefore step 3 is shown with a dashed box in Fig. 4).

Similarly to above, steps 7, 8 and 9 of Fig. 3 have been summed up in step 4 in Fig. 4. The difference is that the PDU session is setup without establishing resources for the packet flow of App 1 but only for App 2. In step 5 App 2 is informed about the requested service data transfer being available.

At any point later, the need to change the IP-address of the first PDU session (i.e. the PDU session of Flow 1) occurs, shown in step 6 either detected by the MMF or the SMF or both. This may be due to mobility of the UE and another TUPF becoming more efficient than the current one or due to changes of available access technologies for the UE or other reasons. Due to the flag set in step 3, either the MMF or any SMF may decide to switch Flow 1 from the first PDU session to the new PDU session. If step 3 has been omitted, step 7 can also include the MMF or SMF to check all Flows of the first PDU session for additional QoS parameters that show a switch to the new PDU session is beneficial.

In steps 8 and 9 the PDU session resources are modified to serve Flow 1 in addition in the AN as well as the New UPF(s). The UE is informed about the modified session in step 10 including modified filters that steer Flow 1 to be transmitted over the new PDU session. An indication to App 1 informing the application about new QoS may be provided in the UE. If Flow 1 was the only packet flow within the first PDU session, the first PDU session could be released after the described procedure (not shown).

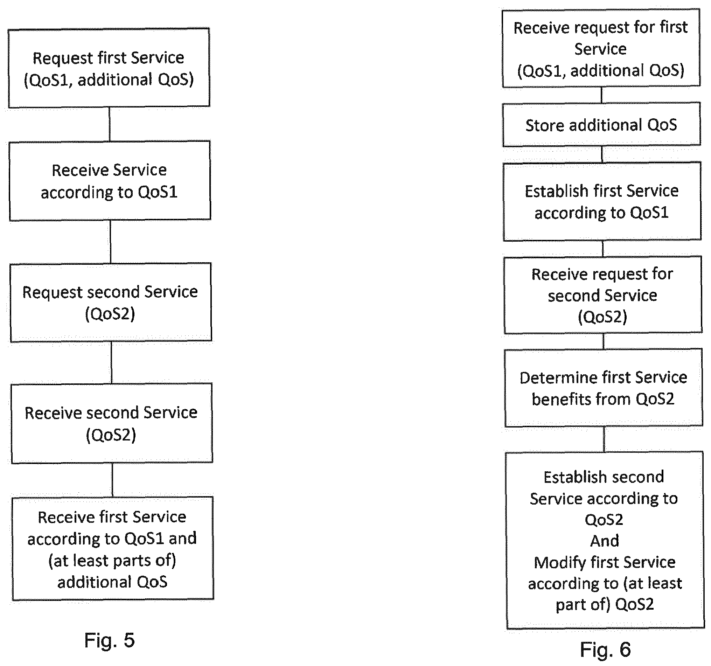

Summarising the above, Fig. 5 is a flow chart showing steps performed by a UE. The UE requests a first service from the network and provides first QoS descriptions and additional QoS descriptions to the network. Then the UE receives the service from the network based on the first QoS description. Later the UE requests a second service from the network and provides second QoS descriptions to the network. Then the UE receives the second service based on second QoS descriptions and it receives a modified first service based on the provided first QoS description and at least in parts based on additional QoS descriptions.

Fig. 6 is a flow chart showing steps performed from a perspective of the network. The network receives a request for a first service with first and additional QoS description from a UE. The network stores the additional QoS description and establishes the first service based on the first QoS descriptions. Later the network receives a request for a second service with second QoS descriptions from the UE. The network determines that the first service would benefit from QoS based at least in parts on the second QoS descriptions which parts are contained in the additional QoS description. Then the network establishes the second service according to the second QoS descriptions and modifies the first service based at least in parts on the second QoS descriptions.

The invention is particularly beneficial when the QoS setting is associated with a session and service continuity (SSC) mode as described above.

## Claims

1. A method of providing a quality of service setting for a first application (14) operating on a user equipment device (10), UE, the first application involving communication between the UE and a base station of a communication network, the method comprising:
determining a first quality of service setting for the first application being served by a first packet data unit, PDU, session, the first quality of service setting comprising a minimum service requirement, wherein the method further comprises:
determining if the first application could benefit from a quality of service setting higher than the first quality of service setting and if so, storing that information either in the UE or in the network; and
following an initiation of a second application (14) in the UE involving communication between the UE and the base station and served by a second PDU session, the second application requiring a second quality of service setting higher than the first quality of service setting, switching a packet flow of the first application to the second PDU session only if it has been determined from the stored information that the first application would benefit from the higher quality of service setting of the second PDU session.

2. The method according to claim 1, wherein the information is stored in the UE.

3. The method according to claim 1, wherein the information is stored in a network entity of the communication network.

4. The method according to any preceding claim, wherein the information is in the form of a flag setting.

5. The method according to any one of claims 1 to 3, wherein the information includes at least one parameter for the communication.

6. The method according to claim 5, wherein the at least one parameter is a parameter selected from a list comprising an IP-address preservation level; a service continuity level and a loss of data level.

7. The method according to any preceding claim, wherein the first quality of service setting is changed by a network entity of the communication network.

8. The method according to any one of claims 1 to 6, wherein the first quality of service setting is changed by the UE.

9. The method according to any preceding claim, wherein the information is transmitted to the base station as part of a service request message.

10. The method according to any one of claims 1 to 8, wherein the information is transmitted to the base station during a packet data unit session establishment request.

11. The method of claim 1 wherein the first quality of service setting is associated with a first session and service continuity, SSC, mode and the second quality of service setting is associated with a second SSC mode different from the first SSC mode, and the first and second SSC modes distinguish at least one of whether a network address used for a service may change and/or whether a connectivity service may be released by the network and/or whether before a connectivity service of an application is released a new connectivity service for the application is setup.

12. A user equipment device (10), UE, adapted to run a first application (14) and a second application (14) and wherein both the first application and the second application involve communication between the UE and a base station, the UE being arranged to determine a first quality of service setting for the first application being served by a first packet data unit, PDU, session, the first quality of service setting comprising a minimum service requirement, wherein the UE device is further arranged to determine if the first application could benefit from a quality of service setting higher than the first quality of service setting and if so to store that information; and following an initiation of the second application served by a second PDU session, the second application requiring a second quality of service setting higher than the first quality of service setting to switch a packet flow of the first application to the second PDU session only if it has been determined from the stored information that the first application would benefit from the higher quality of service setting of the second PDU session.

13. The UE according to claim 12, wherein the information is in the form of a flag setting.

14. The UE according to claim 12, wherein the information includes at least one parameter for the communication with the base station.

15. A network equipment device adapted to communicate with a user equipment device (10), UE, running a first application (14) and a second application (14) which both involve communication between the network and the UE, wherein the network equipment device is adapted to receive from the UE a first quality of service setting for the first application being served by a first packet data unit, PDU, session, the first quality of service setting comprising a minimum service requirement and the network equipment is also adapted to receive information from the UE as to whether the first application could benefit from a quality of service setting higher than the first quality of service setting and if so to store that information; wherein the network equipment device is further arranged following an initiation of the second application served by a second PDU session requiring a second quality of service setting higher than the first quality of service setting to switch a packet flow of the first application to the second PDU session only if it has been determined from the stored information that the first application would benefit from the higher quality of service setting of the second PDU session.

## Patentansprüche

1. Verfahren zum Bereitstellen einer Dienstgüteeinstellung für eine erste Anwendung (14), die auf einer Benutzergerätvorrichtung (10), UE, betrieben wird, wobei die erste Anwendung eine Kommunikation zwischen der UE und einer Basisstation eines Kommunikationsnetzwerks beinhaltet, wobei das Verfahren umfasst:
Bestimmen einer ersten Dienstgüteeinstellung, QoS1, für die erste Anwendung, die von einer ersten Paketdateneinheits-, PDU-, Sitzung bedient wird, wobei die erste Dienstgüteeinstellung eine Mindestdienstanforderung umfasst, wobei das Verfahren weiter umfasst:
Bestimmen, ob die erste Anwendung von einer Dienstgüteeinstellung profitieren könnte, die höher ist als die erste Dienstgüteeinstellung, und wenn ja, Speichern dieser Information entweder in der UE oder im Netzwerk; und
nach Einleitung einer zweiten Anwendung (14) in der UE, die eine Kommunikation zwischen der UE und der Basisstation beinhaltet und durch eine zweite PDU-Sitzung bedient wird, wobei die zweite Anwendung eine zweite Dienstgüteeinstellung, QoS2, erfordert, die höher ist als die erste Dienstgüteeinstellung, Umschalten eines Paketflusses der ersten Anwendung auf die zweite PDU-Sitzung nur dann, wenn aus der gespeicherten Information bestimmt worden ist, dass die erste Anwendung von der höheren Dienstgüteeinstellung der zweiten PDU-Sitzung profitieren würde.

2. Verfahren nach Anspruch 1, wobei die Information in der UE gespeichert ist.

3. Verfahren nach Anspruch 1, wobei die Information in einer Netzwerkeinheit des Kommunikationsnetzwerks gespeichert ist.

4. Verfahren nach einem vorstehenden Anspruch, wobei die Information in Form einer Flag-Einstellung vorliegt.

5. Verfahren nach einem der Ansprüche 1 bis 3, wobei die Information mindestens einen Parameter für die Kommunikation beinhaltet.

6. Verfahren nach Anspruch 5, wobei der mindestens eine Parameter ein Parameter ist, der aus einer Liste ausgewählt ist, die einen IP-Adressbewahrungsgrad, einen Dienstkontinuitätsgrad und einen Datenverlustgrad umfasst.

7. Verfahren nach einem vorstehenden Anspruch, wobei die erste Dienstgüteeinstellung von einer Netzwerkeinheit des Kommunikationsnetzwerks geändert wird.

8. Verfahren nach einem der Ansprüche 1 bis 6, wobei die erste Dienstgüteeinstellung durch die UE geändert wird.

9. Verfahren nach einem vorstehenden Anspruch, wobei die Information als Teil einer Dienstanforderungsnachricht an die Basisstation übertragen wird.

10. Verfahren nach einem der Ansprüche 1 bis 8, wobei die Information durch die Basisstation während einer Anforderung zum Sitzungsaufbau einer Paketdateneinheit übertragen wird.

11. Verfahren nach Anspruch 1, wobei die erste Dienstgüteeinstellung einem ersten Sitzungs- und Dienstkontinuitäts-, SSC-, Modus zugeordnet ist und die zweite Dienstgüteeinstellung einem zweiten SSC-Modus zugeordnet ist, der sich vom ersten SSC-Modus unterscheidet, und der erste und der zweite SSC-Modus mindestens eines davon unterscheiden, ob sich eine für einen Dienst verwendete Netzwerkadresse ändern kann und/oder ob ein Konnektivitätsdienst vom Netzwerk freigegeben werden kann und/oder ob vor der Freigabe eines Konnektivitätsdienstes einer Anwendung ein neuer Konnektivitätsdienst für die Anwendung eingerichtet wird.

12. Benutzergerätvorrichtung (10), UE, die angepasst ist, um eine erste Anwendung (14) und eine zweite Anwendung (14) auszuführen, und wobei sowohl die erste Anwendung als auch die zweite Anwendung eine Kommunikation zwischen der UE und einer Basisstation beinhalten, wobei die UE eingerichtet ist, um eine erste Dienstgüteeinstellung, QoS1, für die erste Anwendung zu bestimmen, die durch eine erste Paketdateneinheits-, PDU-, Sitzung bedient wird, wobei die erste Dienstqualitätseinstellung eine Mindestdienstanforderung umfasst, wobei die UE-Vorrichtung weiter eingerichtet ist, um zu bestimmen, ob die erste Anwendung von einer Dienstgüteeinstellung profitieren könnte, die höher ist als die erste Dienstgüteeinstellung, und wenn dies der Fall ist, diese Information zu speichern; und nach Einleitung der zweiten Anwendung, die von einer zweiten PDU-Sitzung bedient wird, wobei die zweite Anwendung eine zweite Dienstgüteeinstellung, QoS2, benötigt, die höher ist als die erste Dienstgüteeinstellung, um einen Paketfluss der ersten Anwendung nur dann auf die zweite PDU-Sitzung umzuschalten, wenn aus der gespeicherten Information bestimmt worden ist, dass die erste Anwendung von der höheren Dienstgüteeinstellung der zweiten PDU-Sitzung profitieren würde.

13. UE nach Anspruch 12, wobei die Information in Form einer Flag-Einstellung vorliegt.

14. UE nach Anspruch 12, wobei die Information mindestens einen Parameter für die Kommunikation mit der Basisstation beinhaltet.

15. Netzwerkgerätvorrichtung, MMF, die angepasst ist, um mit einer Benutzergerätvorrichtung (10), UE, zu kommunizieren, die eine erste Anwendung (14) und eine zweite Anwendung (14) ausführt, die beide eine Kommunikation zwischen dem Netzwerk und der UE beinhalten, wobei die Netzwerkgerätvorrichtung angepasst ist, um von der UE eine erste Dienstgüteeinstellung, QoS1, für die erste Anwendung zu empfangen, die durch eine erste Paketdateneinheits-, PDU-, Sitzung bedient wird, wobei die erste Dienstgüteeinstellung eine Mindestdienstanforderung umfasst, und die Netzwerkgerätvorrichtung auch angepasst ist, um von der UE eine Information darüber zu empfangen, ob die erste Anwendung von einer Dienstgüteeinstellung profitieren könnte, die höher ist als die erste Dienstgüteeinstellung, und wenn dies der Fall ist, diese Information zu speichern; wobei die Netzwerkgerätvorrichtung weiter eingerichtet ist, um nach Einleitung der zweiten Anwendung, die von einer zweiten PDU-Sitzung bedient wird, die eine zweite Dienstgüteeinstellung, QoS2, erfordert, die höher ist als die erste Dienstgüteeinstellung, einen Paketfluss der ersten Anwendung nur dann auf die zweite PDU-Sitzung umzuschalten, wenn aus der gespeicherten Information bestimmt worden ist, dass die erste Anwendung von der höheren Dienstgüteeinstellung der zweiten PDU-Sitzung profitieren würde.

## Revendications

1. Procédé de fourniture d'un réglage de qualité de service pour une première application (14) fonctionnant sur un dispositif d'équipement utilisateur (10), UE, la première application impliquant une communication entre l'UE et une station de base d'un réseau de communication, le procédé comprenant l'étape consistant à :
déterminer un premier réglage de qualité de service, QoS1, pour la première application exécutée par une première session d'unité de données par paquets, PDU, le premier réglage de qualité de service comprenant une exigence de service minimum, dans lequel le procédé comprend en outre les étapes consistant à :
déterminer si la première application pourrait bénéficier d'un réglage de qualité de service supérieur au premier réglage de qualité de service et, si tel est le cas, stocker ces informations soit dans l'UE, soit dans le réseau ; et
suite à un lancement d'une seconde application (14) dans l'UE impliquant une communication entre l'UE et la station de base et exécutée par une seconde session PDU, la seconde application nécessitant un second réglage de qualité de service, QoS2, supérieur au premier réglage de qualité de service, commuter un flux de paquets de la première application vers la seconde session PDU uniquement s'il a été déterminé à partir des informations stockées que la première application bénéficierait du réglage de qualité de service supérieur de la seconde session PDU.

2. Procédé selon la revendication 1, dans lequel les informations sont stockées dans l'UE.

3. Procédé selon la revendication 1, dans lequel les informations sont stockées dans une entité de réseau du réseau de communication.

4. Procédé selon une quelconque revendication précédente, dans lequel les informations se présentent sous la forme d'un réglage de drapeau.

5. Procédé selon l'une quelconque des revendications 1 à 3, dans lequel les informations incluent au moins un paramètre pour la communication.

6. Procédé selon la revendication 5, dans lequel le au moins un paramètre est un paramètre sélectionné dans une liste comprenant un niveau de préservation d'adresse IP ; un niveau de continuité de service et un niveau de perte de données.

7. Procédé selon une quelconque revendication précédente, dans lequel le premier réglage de qualité de service est modifié par une entité de réseau du réseau de communication.

8. Procédé selon l'une quelconque des revendications 1 à 6, dans lequel le premier réglage de qualité de service est modifié par l'UE.

9. Procédé selon une quelconque revendication précédente, dans lequel les informations sont transmises à la station de base dans le cadre d'un message de demande de service.

10. Procédé selon l'une quelconque des revendications 1 à 8, dans lequel les informations sont transmises à la station de base lors d'une demande d'établissement de session d'unité de données par paquets.

11. Procédé selon la revendication 1, dans lequel le premier réglage de qualité de service est associé à un premier mode de session et de continuité de service, SSC, et le second réglage de qualité de service est associé à un second mode SSC différent du premier mode SSC, et les premier et second modes SSC distinguent au moins l'un parmi si une adresse réseau utilisée pour un service peut changer ou non et/ou si un service de connectivité peut être libéré par le réseau et/ou si, avant la libération d'un service de connectivité d'une application, un nouveau service de connectivité pour l'application est configuré.

12. Dispositif d'équipement utilisateur (10), UE, conçu pour exécuter une première application (14) et une seconde application (14) et dans lequel la première application et la seconde application impliquent toutes deux une communication entre l'UE et une station de base, l'UE étant agencé pour déterminer un premier réglage de qualité de service, QoS1, pour la première application exécutée par une première session d'unité de données par paquets, PDU, le premier réglage de qualité de service comprenant une exigence de service minimum, dans lequel le dispositif UE est en outre agencé pour déterminer si la première application pourrait bénéficier d'un réglage de qualité de service supérieur au premier réglage de qualité de service et, si tel est le cas, stocker ces informations ; et à la suite d'un lancement de la seconde application exécutée par une seconde session PDU, la seconde application nécessitant un second réglage de qualité de service, QoS2, supérieur au premier réglage de qualité de service pour commuter un flux de paquets de la première application vers la seconde session PDU uniquement s'il a été déterminé à partir des informations stockées que la première application bénéficierait du réglage de qualité de service supérieur de la seconde session PDU.

13. UE selon la revendication 12, dans lequel les informations se présentent sous la forme d'un réglage de drapeau.

14. UE selon la revendication 12, dans lequel les informations incluent au moins un paramètre pour la communication avec la station de base.

15. Dispositif d'équipement de réseau, MMF, conçu pour communiquer avec un dispositif d'équipement utilisateur (10), UE, exécutant une première application (14) et une seconde application (14) qui impliquent toutes deux une communication entre le réseau et l'UE, dans lequel le dispositif d'équipement de réseau est conçu pour recevoir de l'UE un premier réglage de qualité de service, QoS1, pour la première application exécutée par une première session d'unité de données par paquets, PDU, le premier réglage de qualité de service comprenant une exigence de service minimum et le dispositif d'équipement de réseau est également conçu pour recevoir des informations en provenance de l'UE indiquant si la première application pourrait bénéficier d'un réglage de qualité de service supérieur au premier réglage de qualité de service et, si c'est le cas, pour stocker ces informations ; dans lequel le dispositif d'équipement de réseau est en outre agencé pour, à la suite d'un lancement de la seconde application exécutée par une seconde session PDU nécessitant un second réglage de qualité de service, QoS2, supérieur au premier réglage de qualité de service, commuter un flux de paquets de la première application vers la seconde session PDU uniquement s'il a été déterminé à partir des informations stockées que la première application bénéficierait du réglage de qualité de service supérieur de la seconde session PDU.
